# FASCICULE DE BREVET EUROPEEN

(11) **EP 3 515 705 B1**
(45) Date de publication et mention de la délivrance du brevet: **30.08.2023**
(21) Numéro de dépôt: 17780486.1
(22) Date de dépôt: 18.09.2017
(51) Int. Cl.: B32B 17/10, C03B 23/025, B32B 38/14

(54) **PROCEDE D'IMPRESSION SUR UNE FACE EXTERIEURE D'UN VITRAGE FEUILLETE**
VERFAHREN ZUM DRUCKEN AUF EINE ÄUSSERE FLÄCHE EINER VERBUNDVERGLASUNG
PROCESS FOR PRINTING ON AN EXTERIOR SURFACE OF A LAMINATED GLAZING

(30) Priorité: 21.09.2016 FR 1658837
(43) Date de publication de la demande: 31.07.2019
(73) Titulaire: SAINT-GOBAIN GLASS FRANCE, 92400 Courbevoie (FR)
(72) Inventeur: BRIQUET, Clément, 60157 Elincourt Sainte Marguerite (FR)
(74) Mandataire: Saint-Gobain Recherche
(86) Numéro de dépôt international: PCT/FR2017/052484
(87) Numéro de publication internationale: WO 2018/055268

(56) Documents cités:
- EP-A1- 0 553 003
- EP-A2- 0 773 706
- WO-A1-2016/030678
- US-A1- 2003 154 868
- US-B1- 6 495 261

## Description

L'invention est relative aux vitrages feuilletés utilisés pour un véhicule de transport, notamment comme pare-brise de véhicule automobile susceptible de porter de nombreuses fonctionnalités et nombreux accessoires, parmi lesquels on peut citer des couches chauffantes de dégivrage / désembuage, des couches de contrôle solaire, une embase ou support de rétroviseur intérieur ou de caméras stéréoscopiques, un détecteur de pluie...

Il est connu de munir de tels vitrages feuilletés d'émail sérigraphié opaque, tel que noir, pour cacher le cordon de colle du vitrage sur la baie de carrosserie, les bords des couches minces fonctionnelles démargées, c'est-à-dire dont une petite bande périphérique a été soumise à une ablation, les bus-bars qui consistent en sérigraphies argentées et permettent de relier une couche fonctionnelle électroconductrice (chauffante...) à une source de courant électrique, l'embase de rétroviseur intérieur, le ou les supports de caméras stéréoscopiques, le détecteur de pluie... vus de l'extérieur et/ou de l'intérieur du véhicule, selon les cas. Dans la suite du texte on désignera les feuilles de verre constituant un vitrage feuilleté par « extérieure » / « intérieure » en référence à leur position de montage dans la baie de carrosserie. D'autre part il est d'usage commun de numéroter les faces d'un pare-brise feuilleté par exemple, à partir de la face en contact avec l'atmosphère extérieure en position de montage ; ainsi les faces d'un pare-brise feuilleté à deux feuilles de verre sont numérotées de 1 (pour la face extérieure) à 4 pour la face en contact avec l'atmosphère de l'habitacle.

Pour cacher de l'extérieur du véhicule certains des éléments précités d'un pare-brise feuilleté à deux feuilles de verre par exemple, il est connu de munir la face intérieure de la feuille de verre extérieure (face 2) d'émail noir sérigraphié. De manière équivalente, pour cacher de l'intérieur, voire également de l'extérieur du véhicule certains desdits éléments précités, il est intéressant de munir la face intérieure de la feuille de verre intérieure (face 4 d'un vitrage feuilleté à deux feuilles de verre) d'émail noir. On procède généralement à l'impression notamment par sérigraphie sur le substrat plan (c'est-à-dire avant bombage), et dont la face opposée à celle sur laquelle on imprime (par exemple ici la face 3).est généralement posée sur un support tel que bande de convoyage. Cependant, la face 3 d'un pare-brise feuilleté à deux feuilles de verre comporte fréquemment une couche fonctionnelle telle que de contrôle solaire, ou chauffante, par exemple bicouche ou tricouche argent, ou bien oxyde d'indium dopé à l'étain (en anglais ITO pour Indium Tin Oxide), et dans le cas d'une couche chauffante, des bus bars (sérigraphies argentées) formés en contact avec la couche électroconductrice dans le but de la relier à une source de courant électrique ; ainsi la zone de la couche comprise entre deux bus bars est-elle chauffante. Ces couches fonctionnelles sur face 3 sont fréquemment démargées, c'est-à-dire comme déjà mentionné qu'une bande périphérique en a été éliminée (ablation...) ; il est intéressant de cacher à la vue de l'extérieur ou de l'intérieur du véhicule les bords de telles couches démargées.

De plus ces couches éventuellement démargées et les bus bars qu'elles portent sont incompatibles avec le contact d'une bande de convoyage ou support similaire, qui risque de rayer les couches, arracher ou endommager les bus bars.

L'invention a donc pour but la mise à disposition d'un procédé de fabrication d'un vitrage feuilleté dans lequel la face d'une feuille de verre opposée à celle munie d'une couche fonctionnelle et éventuellement de bus bars fragile(s), est imprimée, notamment par sérigraphie.

Ce but est atteint par l'invention qui, en conséquence, a pour objet un procédé de fabrication d'un vitrage feuilleté comprenant une première et une seconde feuilles de verre collées l'une à l'autre par une couche adhésive intercalaire, caractérisé en ce qu'il comprend les opérations consistant à
- appairer les première et seconde feuilles de verre planes puis les déposer dans une position relative proche de celle à laquelle elles sont destinées dans le vitrage feuilleté, dans un poste d'impression, au moyen d'un outil de préhension qui ne les déplace l'une par rapport à l'autre que dans la direction perpendiculaire à leur surface principale, la face de la première feuille de verre orientée vers la seconde feuille de verre comportant un premier motif imprimé ;
- mesurer au moyen d'une caméra la position dudit premier motif imprimé de la première feuille de verre ;
- positionner un robot à une ou plusieurs têtes d'impression dans ledit poste d'impression relativement à la mesure de la position du premier motif imprimé, valider sa position par rapport aux première et seconde feuilles de verre et imprimer sur la face de la seconde feuille de verre opposée à la première feuille de verre un second motif imprimé ; et
- déposer les première et seconde feuilles de verre dans un four de bombage au moyen d'un outil de préhension qui ne les déplace l'une par rapport à l'autre que dans la direction perpendiculaire à leur surface principale.

Conformément à l'invention, on réalise la sérigraphie du second motif imprimé au moment de l'appairage des deux feuilles de verre, et avant leur transfert dans le four de bombage. Ainsi peut-on mettre à profit des outils de préhension des feuilles de verre, notamment par leur chant, qui sont aptes à ne les déplacer l'une par rapport à l'autre que dans la direction perpendiculaire à leur surface principale lorsqu'elles sont au plus près l'une de l'autre, voire sans qu'il y ait nécessairement contact entre elles. Ainsi elles peuvent néanmoins entrer en contact l'une avec l'autre, mais selon la direction perpendiculaire à leur surface principale, de sorte que ni le premier motif imprimé sur la première feuille de verre (face 2), ni la couche fonctionnelle démargée et les bus-bars de la face de la seconde feuille de verre orientée vers la première (face 3), ne risquent d'être endommagés.

L'invention est possible grâce à l'emploi qui est inconnu d'un robot ayant une ou plusieurs têtes d'impression notamment par sérigraphie.

Les première et seconde feuilles de verre peuvent être déposées dans le four de bombage, empilées et en contact l'une avec l'autre, sur un squelette de bombage par effondrement gravitaire. La cuisson du second motif imprimé a lieu dans le four de bombage.

Selon des caractéristiques préférées du procédé de l'invention :
- pour mesurer la position dudit premier motif imprimé de la première feuille de verre, la caméra est positionnée du côté de la première feuille de verre opposé à la seconde feuille de verre ;
- dans ledit poste d'impression, la seconde feuille de verre est empilée en position sensiblement horizontale au-dessus de la première feuille de verre, parallèlement à et éventuellement à une petite distance de celle-ci ;
- la ou lesdites une ou plusieurs tête(s) d'impression est (sont) une (des) tête(s) d'impression par sérigraphie ou d'impression digitale ;
- après l'impression sur la seconde feuille de verre du second motif imprimé et avant le dépôt des première et seconde feuilles de verre dans un four de bombage, on contrôle au moyen d'une caméra la qualité du second motif imprimé ;
- pour contrôler la qualité du second motif imprimé, on effectue au moyen de la caméra une prise de vue en réflexion de ce dernier et de la surface de la seconde feuille de verre sur laquelle il est imprimé ; ainsi, par contraste entre la réflexion de l'émail et celle du verre, on détecte d'éventuels défauts pouvant consister soit en un manque d'émail dans la zone du second motif imprimé (défaut transparent), soit en un débordement de l'émail en dehors de la surface prévue du second motif imprimé (défaut opaque, en général noir) ; dans la mesure où la seconde feuille de verre est empilée au-dessus de la première, on peut alors mettre en oeuvre une illumination supérieure ; cette opération de contrôle est effectuée avant le dépôt dans un four de bombage ;
- si la qualité du second motif imprimé est estimée insuffisante, le robot à une ou plusieurs têtes d'impression qui l'a produit est écarté en vue de sa maintenance et son remplacement par un autre robot équivalent.
- L'invention a également pour objet un vitrage feuilleté pour véhicule de transport terrestre, aérien ou aquatique, notamment automobile, obtenu par un procédé tel que décrit précédemment, caractérisé en ce que ladite première feuille de verre est destinée à être orientée vers l'atmosphère extérieure et ladite seconde feuille de verre est destinée à être orientée vers l'intérieur du véhicule de transport, le vitrage feuilleté constituant un pare-brise de véhicule automobile, et la face de la seconde feuille de verre orientée vers la première feuille de verre porte une couche fonctionnelle éventuellement démargée, caractérisé en ce que le vitrage feuilleté est équipé, dans sa partie supérieure centrale en position de montage, d'un rétroviseur intérieur, de deux caméras stéréoscopiques et éventuellement d'un détecteur de pluie.

Selon une caractéristique préférée de ce vitrage feuilleté :
- la couche fonctionnelle est électroconductrice et reliée à une source de courant électrique par l'intermédiaire de bus-bars.

L'invention sera mieux comprise à la lumière des dessins en annexe dans lesquels
- la Figure 1 est une vue schématique en coupe de la partie supérieure centrale d'un pare-brise automobile selon l'invention ; et
- la Figure 2 représente, dans une vue schématique de face de cette partie supérieure centrale de pare-brise, les délimitations superposées desdits premier et second motifs imprimés.

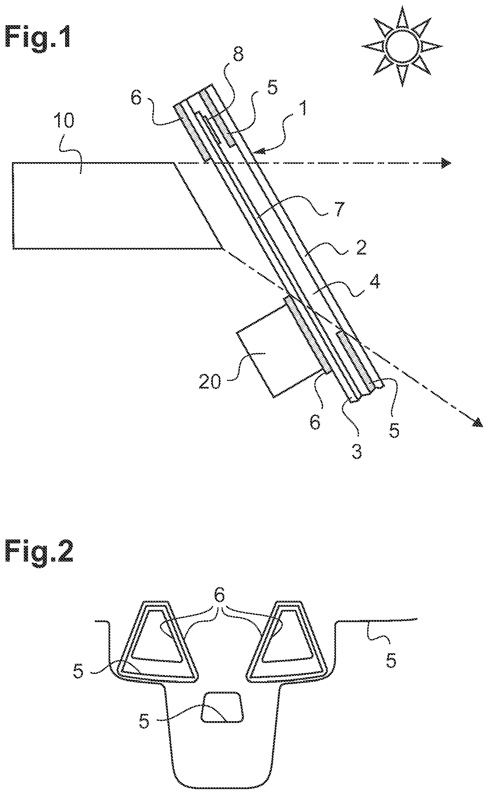

En référence à la Figure 1, la partie supérieure centrale du pare-brise feuilleté 1 est représentée inclinée comme en position de montage dans la baie de carrosserie. Bien que représenté plan, le pare-brise est bombé. Il est constitué d'une première feuille de verre 2 flotté silico-sodocalique destinée à être en contact avec l'atmosphère extérieure, et d'une seconde feuille de verre 3 flotté silico-sodocalcique destinée à être en contact avec l'atmosphère de l'habitacle du véhicule automobile. Les feuilles de verre 2 et 3 ont des épaisseurs identiques ou différentes comprises entre 1 et 3 mm, notamment entre 1,2 et 2,5 mm, par exemple de 1,5 ou 2,1 mm ; elles sont collées l'une à l'autre au moyen d'une couche adhésive intercalaire 4, telle que de polyvinylbutyral (PVB) de 0,76 mm d'épaisseur. Les première et seconde feuilles de verre 2 et 3 peuvent être chacune indépendamment l'une de l'autre de toute autre composition, notamment borosilicate, ou destinée à l'aéronautique...

Les première et seconde feuilles de verre 2, 3 définissent de l'extérieur vers l'intérieur du véhicule, c'est-à-dire de la droite vers la gauche sur la Figure, quatre faces numérotées 1 à 4 (non indiquées sur la Figure). La face 3 du pare-brise 1 (face extérieure de la seconde feuille de verre 3) est munie d'une couche mince chauffante 7 constituée d'un empilement à deux ou trois couches d'argent, ou bien d'oxyde d'indium dopé à l'étain (en anglais ITO pour Indium Tin Oxide). La couche 7 est démargée : une partie périphérique de sa surface a été retirée pour une ablation mécanique ; son bord est donc en retrait par rapport à celui du vitrage feuilleté 1. La couche 7 est électroconductrice et reliée à une source de courant électrique par l'intermédiaire de bus bars 8 constitués de sérigraphie argentée ; un bus bar 8 prévu le long du côté supérieur du vitrage 1 coopère avec un bus bar prévu le long de son côté inférieur et non représenté pour créer dans la couche 7 une différence de potentiel, de sorte que sa zone comprise entre les deux bus bars soit chauffante.

Le pare-brise feuilleté 1 est équipé de deux caméras stéréoscopiques 10 qui permettent de relever et consigner la distance avec les obstacles les plus proches du véhicule dans la direction avant, afin d'agir éventuellement sur l'accélération / le freinage de l'automobile. On a représenté schématiquement deux flèches symbolisant l'angle de vision d'une caméra stéréoscopique 10. On a également représenté l'embase de rétroviseur - support des caméras stéréoscopiques 20.

La face 2 du pare-brise feuilleté (face intérieure de la première feuille de verre 2) est munie d'une sérigraphie d'émail noir (premier motif imprimé) 5. Celui-ci 5 permet de cacher de la vue d'un observateur extérieur le cordon de colle périphérique non représenté du vitrage 1 sur la baie de carrosserie, la majeure partie de l'embase de rétroviseur - support des caméras stéréoscopiques 20, le bord démargé de la couche chauffante 7 et les bus bars 8.

On voit sur la Figure 1 que l'ouverture nécessaire de l'angle de vision des caméras stéréoscopiques 10 ne permet pas d'étendre suffisamment la surface du premier motif imprimé 5 pour cacher complètement l'embase - support 20 d'une vue de l'extérieur.

A cet effet, notamment, la face 4 du pare-brise feuilleté (face intérieure de la seconde feuille de verre 3) est également munie d'une sérigraphie d'émail noir (second motif imprimé) 6, par l'intermédiaire de laquelle l'embase - support 20 est collée sur cette face 4 (face intérieure du pare-brise 1). Le second motif imprimé 6 participe donc également à cacher cette embase - support 20 d'une vue de l'extérieur. Le second motif imprimé 6 cache aussi, pour l'essentiel, le bord démargé de la couche 7 et les bus bars 8 d'une vue de l'habitacle de l'automobile.

En référence à la Figure 2, les premier et second motifs imprimés 5 et 6, qui sont dans des épaisseurs différentes du feuilleté 1 comme il a été vu ci-dessus, sont représentées superposées.

Le premier motif imprimé 5 s'étend sur une bande périphérique du pare-brise 1 ainsi qu'en face d'une majeure partie de l'embase - support 20. Il comporte deux trous trapézoïdaux correspondant aux surfaces de transparence nécessaires pour la vision des caméras stéréoscopiques 10, ainsi que, en-dessous de ces deux trous sur la Figure, un trou trapézoïdal à coins arrondis correspondant à une zone de transparence nécessaire pour un détecteur de pluie, auquel peut être asservie, notamment, la mise en action d'essuie-glaces.

Le second motif imprimé 6 délimite les zones de vision des caméras stéréoscopiques 10.

## Revendications

1. Procédé de fabrication d'un vitrage feuilleté (1) comprenant une première et une seconde feuilles de verre (2 ; 3) collées l'une à l'autre par une couche adhésive intercalaire (4), **caractérisé en ce qu'**il comprend les opérations consistant à
- appairer les première et seconde feuilles de verre (2 ; 3) planes puis les déposer dans une position relative proche de celle à laquelle elles sont destinées dans le vitrage feuilleté (1), dans un poste d'impression, au moyen d'un outil de préhension qui ne les déplace l'une (2 ; 3) par rapport à l'autre (3 ; 2) que dans la direction perpendiculaire à leur surface principale, la face de la première feuille de verre (2) orientée vers la seconde feuille de verre (3) comportant un premier motif imprimé (5) ;
- mesurer au moyen d'une caméra la position dudit premier motif imprimé (5) de la première feuille de verre (2);
- positionner un robot à une ou plusieurs têtes d'impression dans ledit poste d'impression relativement à la mesure de la position du premier motif imprimé (5), valider sa position par rapport aux première et seconde feuilles de verre (2 ; 3) et imprimer sur la face de la seconde feuille de verre (3) opposée à la première feuille de verre (2) un second motif imprimé (6) ; et
- déposer les première et seconde feuilles de verre (2 ; 3) dans un four de bombage au moyen d'un outil de préhension qui ne les déplace l'une (2 ; 3) par rapport à l'autre (3 ; 2) que dans la direction perpendiculaire à leur surface principale.

2. Procédé selon la revendication 1, **caractérisé en ce que** pour mesurer la position dudit premier motif imprimé (5) de la première feuille de verre (2), la caméra est positionnée du côté de la première feuille de verre (2) opposé à la seconde feuille de verre (3).

3. Procédé selon l'une des revendications précédentes, **caractérisé en ce que** dans ledit poste d'impression, la seconde feuille de verre (3) est empilée en position sensiblement horizontale au-dessus de la première feuille de verre (2), parallèlement à et éventuellement à une petite distance de celle-ci (2).

4. Procédé selon l'une des revendications précédentes, **caractérisé en ce que** la ou lesdites une ou plusieurs tête(s) d'impression est (sont) une (des) tête(s) d'impression par sérigraphie ou d'impression digitale.

5. Procédé selon l'une des revendications précédentes, **caractérisé en ce qu'**après l'impression sur la seconde feuille de verre (3) du second motif imprimé (6) et avant le dépôt des première et seconde feuilles de verre (2 ; 3) dans un four de bombage, on contrôle au moyen d'une caméra la qualité du second motif imprimé (6).

6. Procédé selon la revendication 5, **caractérisé en ce que** pour contrôler la qualité du second motif imprimé (6), on effectue au moyen de la caméra une prise de vue en réflexion de ce dernier (6) et de la surface de la seconde feuille de verre (3) sur laquelle il est imprimé.

7. Procédé selon l'une des revendications 5 ou 6, **caractérisé en ce que** si la qualité du second motif imprimé (6) est estimée insuffisante, le robot à une ou plusieurs têtes d'impression qui l'a produit est écarté en vue de sa maintenance et son remplacement par un autre robot équivalent.

8. Vitrage feuilleté (1) pour véhicule de transport terrestre, aérien ou aquatique, notamment automobile, obtenu par un procédé selon l'une des revendications précédentes, ladite première feuille de verre (2) étant destinée à être orientée vers l'atmosphère extérieure et ladite seconde feuille de verre (3) étant destinée à être orientée vers l'intérieur du véhicule de transport, le vitrage feuilleté (1) constituant un pare-brise de véhicule automobile, et la face de la seconde feuille de verre (3) orientée vers la première feuille de verre (2) portant une couche fonctionnelle (7) éventuellement démargée, **caractérisé en ce que** le vitrage feuilleté (1) est équipé, dans sa partie supérieure centrale en position de montage, d'un rétroviseur intérieur, de deux caméras stéréoscopiques et éventuellement d'un détecteur de pluie.

9. Vitrage feuilleté (1) selon la revendication 8, **caractérisé en ce que** la couche fonctionnelle (7) est électroconductrice et reliée à une source de courant électrique par l'intermédiaire de bus-bars (8).

## Patentansprüche

1. Verfahren zum Herstellen einer Verbundverglasung (1), umfassend eine erste und eine zweite Glasscheibe (2; 3), die miteinander durch eine dazwischenliegende Klebeschicht (4) verklebt sind, **dadurch gekennzeichnet, dass** es die Vorgänge umfasst, bestehend aus
- Zusammenbringen der ersten und der zweiten ebenen Glasscheibe (2; 3), dann Ablegen von ihnen in eine Position relativ nahe zu derjenigen, für die sie in der Verbundverglasung (1) vorgesehen sind, in einer Druckstation, mittels eines Greifwerkzeugs, das sie, die eine (2; 3) relativ zu der anderen (3; 2), nur in der Richtung senkrecht zu ihrer Hauptoberfläche bewegt, wobei die Fläche der ersten Glasscheibe (2), die zu der zweiten Glasscheibe (3) ausgerichtet ist, ein erstes gedrucktes Muster (5) umfasst;
- Messen, mittels einer Kamera, der Position des ersten gedruckten Musters (5) der ersten Glasscheibe (2);
- Positionieren eines Roboters mit einem oder mehreren Druckköpfen in der Druckstation relativ zu der Messung der Position des ersten gedruckten Musters (5), Validieren seiner Position in Bezug auf die erste und die zweite Glasscheibe (2; 3) und Drucken auf die Fläche der zweiten Glasscheibe (3), die der ersten Glasscheibe (2) gegenüberliegt, eines zweiten gedruckten Musters (6); und
- Ablegen der ersten und der zweiten Glasscheibe (2; 3) in einen Biegeofen, mittels eines Greifwerkzeugs, das sie, die eine (2; 3) relativ zu der anderen (3; 2), nur in der Richtung senkrecht zu ihrer Hauptoberfläche bewegt.

2. Verfahren nach Anspruch 1, **dadurch gekennzeichnet, dass** zum Messen der Position des ersten gedruckten Musters (5) der ersten Glasscheibe (2) die Kamera auf der Seite der ersten Glasscheibe (2) gegenüber der zweiten Glasscheibe (3) positioniert wird.

3. Verfahren nach einem der vorstehenden Ansprüche,
**dadurch gekennzeichnet, dass** in der Druckstation die zweite Glasscheibe (3) in einer Position im Wesentlichen horizontal über der ersten Glasscheibe (2) gestapelt wird, parallel zu und gegebenenfalls mit einem geringen Abstand von dieser (2).

4. Verfahren nach einem der vorstehenden Ansprüche,
**dadurch gekennzeichnet, dass** der eine Druckkopf oder die mehreren Druckköpfe ein oder mehrere Siebdruck- oder Digitaldruck-Druckköpfe ist (sind).

5. Verfahren nach einem der vorstehenden Ansprüche,
**dadurch gekennzeichnet, dass** nach dem Drucken des zweiten gedruckten Musters (6) auf die zweite Glasscheibe (3) und vor dem Ablegen der ersten und der zweiten Glasscheibe (2; 3) in einen Biegeofen, die Qualität des zweiten gedruckten Musters (6) mittels einer Kamera geprüft wird.

6. Verfahren nach Anspruch 5, **dadurch gekennzeichnet, dass** zum Prüfen der Qualität des zweiten gedruckten Musters (6) eine Spiegelaufnahme von letzterem (6) und von der Oberfläche der zweiten Glasscheibe (3), auf die es gedruckt wird, mittels der Kamera vorgenommen wird.

7. Verfahren nach einem der Ansprüche 5 oder 6,
**dadurch gekennzeichnet, dass,** wenn die Qualität des zweiten gedruckten Musters (6) als unzureichend betrachtet wird, der Roboter mit einem oder mehreren Druckköpfen, der es hergestellt hat, zwecks seiner Wartung und seines Ersatzes durch einen anderen gleichwertigen Roboter entfernt wird.

8. Verbundverglasung (1) für ein Fahrzeug für den Land-, Luft- oder Wasserverkehr, insbesondere ein Automobil, die durch ein Verfahren nach einem der vorstehenden Ansprüche erhalten wird, wobei die erste Glasscheibe (2) vorgesehen ist, um zu der Außenatmosphäre ausgerichtet zu sein, und die zweite Glasscheibe (3) vorgesehen ist, um zu dem Inneren des Transportfahrzeugs ausgerichtet zu sein, wobei die Verbundverglasung (1) eine Windschutzscheibe eines Kraftfahrzeugs bildet, und wobei die Fläche der zweiten Glasscheibe (3), die zu der ersten Glasscheibe (2) ausgerichtet ist, eine gegebenenfalls randlose funktionelle Schicht (7) aufweist, **dadurch gekennzeichnet, dass** die Verbundverglasung (1) in ihrem oberen Bereich mittig in einer Montageposition mit einem Innenrückspiegel, zwei Stereo-Kameras und gegebenenfalls einem Regensensor ausgestattet ist.

9. Verbundverglasung (1) nach Anspruch 8, **dadurch gekennzeichnet, dass** die funktionelle Schicht (7) elektrisch leitfähig und mit einer elektrischen Stromquelle über Stromschienen (8) verbunden ist.

## Claims

1. Method for manufacturing a laminated glazing (1) comprising a first and a second glass sheet (2; 3) bonded to each other by an adhesive interlayer (4), **characterized in that** it comprises the operations consisting of
- pairing the first and second glass sheets (2; 3) while they are flat and then setting them down in a relative position close to the position they are intended to occupy in the laminated glazing (1), in a printing station, using a gripping tool which moves one glass sheet (2; 3) with respect to the other glass sheet (3; 2) only in the direction perpendicular to their main surface, the face of the first glass sheet (2) oriented toward the second glass sheet (3) comprising a first printed pattern (5);
- using a camera to measure the position of the first printed pattern (5) of the first glass sheet (2);
- positioning a robot having one or more printheads in the printing station relative to the measurement of the position of the first printed pattern (5), validating its position with respect to the first and second glass sheets (2; 3) and printing a second printed pattern (6) on the face of the second glass sheet (3) which is opposite the first glass sheet (2); and
- setting down the first and second glass sheets (2; 3) in a bending oven using a gripping tool which moves one glass sheet (2; 3) with respect to the other glass sheet (3; 2) only in the direction perpendicular to their main surface.

2. Method according to claim 1, **characterized in that** in order to measure the position of the first printed pattern (5) of the first glass sheet (2), the camera is positioned on the side of the first glass sheet (2) which is opposite the second glass sheet (3).

3. Method according to either of the preceding claims, **characterized in that** in the printing station, the second glass sheet (3) is stacked in a substantially horizontal position on top of the first glass sheet (2), in parallel with the sheet and optionally a short distance therefrom (2).

4. Method according to any of the preceding claims, **characterized in that** one or more printhead(s) is (are) screen-printing or digital-printing printheads.

5. Method according to any of the preceding claims, **characterized in that** after printing the second printed pattern (6) on the second glass sheet (3) and before setting down the first and second glass sheets (2; 3) in a bending oven, a camera is used to check the quality of the second printed pattern (6).

6. Method according to claim 5, **characterized in that** in order to check the quality of the second printed pattern (6), the camera is used to take a reflected picture of the latter (6) and of the surface of the second glass sheet (3) on which it is printed.

7. Method according to any of claims 5 or 6, **characterized in that** if the quality of the second printed pattern (6) is considered to be insufficient, the robot with one or more printheads which produced the pattern is taken away for maintenance and replaced by an equivalent other robot.

8. Laminated glazing (1) for a land, air or water transport vehicle, in particular a motor vehicle, obtained by a method according to any of the preceding claims, the first glass sheet (2) being intended to be oriented toward the exterior atmosphere and the second glass sheet (3) being intended to be oriented toward the interior of the transport vehicle, the laminated glazing (1) constituting a motor vehicle windshield, and the face of the second glass sheet (3) oriented toward the first glass sheet (2) bearing an, optionally de-edged, functional layer (7), **characterized in that** the laminated glazing (1) is equipped, in its central upper portion in the mounting position, with an interior rearview mirror, with two stereoscopic cameras and optionally with a rain detector.

9. Laminated glazing (1) according to claim 8, **characterized in that** the functional layer (7) is electroconductive and connected to an electrical current source via busbars (8).
